# EUROPÄISCHE PATENTSCHRIFT

(11) **EP 1 515 805 B1**
(45) Veröffentlichungstag und Bekanntmachung des Hinweises auf die Patenterteilung: **20.09.2006**
(21) Anmeldenummer: 03704515.0
(22) Anmeldetag: 03.02.2003
(51) Int. Cl.: B01L 3/02, B29C 59/00, B29C 37/00

(54) **DURCH SPRITZGUSSVERFAHREN HERGESTELLTE VORRICHTUNG ZUR AUFBEWAHRUNG VON FLÜSSIGKEITEN UND ZUGEHÖRIGES HERSTELLUNGSVERFAHREN**
DEVICE PRODUCED USING AN INJECTION MOLDING METHOD AND PROVIDED FOR STORING LIQUIDS, AND METHOD FOR PRODUCING THIS DEVICE
DISPOSITIF PRODUIT PAR UN PROCEDE DE MOULAGE PAR INJECTION, DESTINE A LA CONSERVATION DE LIQUIDES, ET PROCEDE POUR PRODUIRE CE DISPOSITIF

(30) Priorität: 12.03.2002 DE 10210668
(43) Veröffentlichungstag der Anmeldung: 23.03.2005
(73) Patentinhaber: Degussa AG, 40474 Düsseldorf (DE)
(72) Erfinder: OLES, Markus, 45525 Hattingen (DE); NUN, Edwin, 48727 Billerbeck (DE); SCHLEICH, Bernhard, 45657 Recklinghausen (DE)
(86) Internationale Anmeldenummer: PCT/EP2003/001026
(87) Internationale Veröffentlichungsnummer: WO 2003/076075

(56) Entgegenhaltungen:
- EP-A- 0 117 838
- WO-A-01/32310

## Beschreibung

Die Erfindung betrifft Vorrichtungen, hergestellt mittels Spritzguss, zur Aufbewahrung von Flüssigkeiten wobei die Vorrichtung restlos von den aufbewahrten Flüssigkeiten entleert werden können sowie ein Verfahren zu deren Herstellung.

Zum definierten Aufnehmen von Flüssigkeiten und Verteilen werden häufig Pipettenspitzen oder ähnliche Werkzeuge eingesetzt. Mit Hilfe dieser Pipettenspitzen können Flüssigkeiten aus einem Vorratsbehälter abgenommen oder definierte Flüssigkeitsmengen von einem Behältnis in ein anderes übertragen werden. In der Molekularbiologie, beim High Throughput-Screening oder in der kombinatorischen Chemie werden immer kleinere Volumina pipettiert. Technisch bedingt können die heute auf dem Markt verfügbaren Pipettenspitzen aber nicht beliebig kleine Volumina berührungsfrei, dass heißt mit selbstständigem und vollständigem Ablösen der zu pipettierenden Flüssigkeit von der Pipettenspitze, pipettieren. Technisch ist deshalb eine Pipettenspitze gewünscht, mit der Volumina < 500 nl berührungsfrei pipettiert werden können.

Aus dem Bereich der Klebetechnik und Jet-Ink-Technologie sind Verfahren bekannt, mit denen sehr kleine Tropfen auf eine Oberfläche aufgetragen werden können. DE 2819440 beschreibt ein Verfahren, bei dem aus einem oberhalb der Abgabedüse befindlichen Vorratsbehälter über eine Schlauchleitung Flüssigkeit zur Abgabedüse gefördert wird. An der Öffnung entstehende Tropfen werden durch ein Druckgaspuls abgerissen. Dieses Verfahren kann auch zum Abreißen eines Flüssigkeitstropfens von einer Pipettenspitze genutzt werden und bietet den Vorteil, dass kleinste Tropfen auf eine Oberfläche aufgetragen werden können. Nachteil des Verfahrens ist die schlechte Reproduzierbarkeit der Tropfengröße und dass durch den Druckpuls auch Flüssigkeit aus dem Reaktionsgefäß hinausgedrückt werden kann.

Aus einem anderen technischen Gebiet, der biologisch/pharmazeutischen Industrie, ist das Problem der Verpackung von biologischen oder pharmazeutischen Produkten - meist in Lösung - und der vollständigen, unverdünnten Entnahme dieser Lösungen aus den Verpackungen bekannt. Typische Verpackungen sind Ampullen aus Kunststoff mit oder ohne Verschluss. Häufig werden hochwertige biologische oder pharmazeutische Produkte außerdem in sehr kleinen Mengen verpackt. Dies liegt zum einen an der hohen Wirksamkeit dieser Präparate und zum anderen am sehr hohen Preis dieser Substanzen. Volumina von weniger als 100 µl sind hierbei keine Ausnahme. Es lässt sich beobachten, dass solche Lösungen und Präparate meist nur unvollständig aus diesen Behältnissen entnommen werden können. Dies ist in vielerlei Hinsicht problematisch, z. B. weil die Entsorgung der Behältnisse nur als Sonderabfall erfolgen kann oder weil eine Verabreichung der auf dem Behältnis angegebenen Menge nicht genau erfolgen kann, so dass entweder weniger als die angegebene und damit meist auch verschriebene Menge an Präparat verabreicht wird oder dass, um die verschriebene Menge applizieren zu können, ein weiteres Behältnis geöffnet werden muss, mit dem Nachteil, dass ein größerer Rest an teurem Präparat verworfen werden muss.

Aus der Oberflächentechnik sind verschiedene Verfahren zur Behandlung von Oberflächen bekannt, die diese Oberflächen schmutz- und wasserabweisend ausrüsten. So ist z. B. bekannt, dass zum Erzielen einer guten Selbstreinigung einer Oberfläche die Oberfläche neben einer hydrophoben Oberfläche auch eine gewisse Rauhigkeit aufweisen muss. Eine geeignete Kombination aus Struktur und Hydrophobie macht es möglich, dass schon geringe Mengen bewegtem Wassers auf der Oberfläche haftende Schmutzpartikel mitnimmt und die Oberfläche reinigen (WO 96/04123; US 3354022). Das Wassertropfen auf hydrophoben Oberflächen besonders dann, wenn sie strukturiert sind, abrollen, wurde bereits 1982 von A. A. Abramson in Chimia i Shisn russ.11, 38, beschrieben.

Gegenstände mit flüssigkeitsabweisenden d. h. schwer benetzbaren Oberflächen weisen eine Reihe von interessanten und wirtschaftlich wichtigen Merkmalen auf. So sind sie leicht zu reinigen und bieten Rückständen und Flüssigkeiten wenig Halt.

Stand der Technik bezüglich selbstreinigender Oberflächen ist, gemäß EP 0 933 388, dass für solche selbstreinigenden Oberflächen ein Aspektverhältnis von > 1 und eine Oberflächenenergie von kleiner 20 mN/m erforderlich ist. Das Aspektverhältnis ist hierbei definiert als der Quotient von mittlerer Höhe zur mittleren Breite der Struktur. Vorgenannte Kriterien sind in der Natur, beispielsweise im Lotusblatt, realisiert. Die aus einem hydrophoben, wachsartigen Material gebildete Oberfläche einer Pflanze weist Erhebungen auf, die einige µm voneinander entfernt sind. Wassertropfen kommen im Wesentlichen nur mit diesen Spitzen in Berührung. Solche wasserabstoßenden Oberflächen werden in der Literatur vielfach beschrieben. Ein Beispiel dafür ist ein Artikel in Langmuir 2000, 16, 5754, von Masashi Miwa et al, der beschreibt, dass Kontaktwinkel und Abrollwinkel mit zunehmender Strukturierung künstlicher Oberflächen, gebildet aus Böhmit, aufgetragen auf eine spingecoatete Lackschicht und anschließend kalziniert, zunehmen.

Die Schweizer Patentschrift CH-PS 268258 beschreibt ein Verfahren, bei dem durch Aufbringen von Pulvern, wie Kaolin, Talkum, Ton oder Silicagel, strukturierte Oberflächen erzeugt werden. Die Pulver werden durch Öle und Harze auf Basis von Organosilizium-Verbindungen auf der Oberfläche fixiert.

Der Einsatz von hydrophoben Materialien, wie perfluorierten Polymeren, zur Herstellung von hydrophoben Oberflächen ist bekannt. DE 197 15 906 A1 beschreibt, dass perfluorierte Polymere, wie Polytetrafluorethylen oder Copolymere aus Polytetrafluorethylen mit Perfluoroalkylvinylethern, hydrophobe Oberflächen erzeugen, die strukturiert sind und ein geringes Anhaftvermögen gegenüber Schnee und Eis aufweisen. In JP 11171592 wird ein wasserabweisendes Produkt und dessen Herstellung beschrieben, wobei die schmutzabweisende Oberfläche dadurch hergestellt wird, dass ein Film auf die zu behandelnde Oberfläche aufgetragen wird, der feine Partikel aus Metalloxid und das Hydrolysat eines Metallalkoxids bzw. eines Metallchelates aufweist. Zur Verfestigung dieses Films muss das Substrat, auf welches der Film aufgebracht wurde, bei Temperaturen von oberhalb 400 ° gesintert werden. Dieses Verfahren ist deshalb nur für Substrate einsetzbar, welche auf Temperaturen oberhalb von 400 °C aufgeheizt werden können.

WO 00/58410 kommt zu dem Ergebnis, dass es technisch möglich ist, Oberflächen von Gegenständen künstlich selbstreinigend zu machen. Die hierfür nötigen Oberflächenstrukturen aus Erhebungen und Vertiefungen haben einen Abstand zwischen den Erhebungen der Oberflächenstrukturen im Bereich von 0,1 bis 200 µm und eine Höhe der Erhebung im Bereich 0,1 bis 100 µm. Die hierfür verwendeten Materialien müssen aus hydrophoben Polymeren oder dauerhaft hydrophobiertem Material bestehen. Ein Lösen der Teilchen aus der Trägermatrix muss verhindert werden.

Der Einsatz von hydrophoben Materialien, wie perfluorierten Polymeren, zur Herstellung von hydrophoben Oberflächen ist bekannt. Eine Weiterentwicklung dieser Oberflächen besteht darin, die Oberflächen im µm-Bereich bis nm-Bereich zu strukturieren. US PS 5,599,489 offenbart ein Verfahren, bei dem eine Oberfläche durch Beschuss mit Partikeln einer entsprechenden Größe und anschließender Perfluorierung besonders abweisend ausgestattet werden kann. Ein anderes Verfahren beschreibt H. Saito et al. in "Surface Coatings International", Vd. 80, 1997, S.168 ff. Hier werden Partikel aus Fluorpolymeren auf Metalloberflächen aufgebracht, wobei eine stark erniedrigte Benetzbarkeit der so erzeugten Oberflächen gegenüber Wasser mit einer erheblich reduzierten Vereisungsneigung dargestellt wurde.

Die bisher üblichen Verfahren zur Herstellung von selbstreinigenden Oberflächen sind aufwendig und vielfach nur begrenzt einsetzbar. So sind Prägetechniken unflexibel, was das Aufbringen von Strukturen auf verschieden geformte, dreidimensionale Körper betrifft. Zur Erzeugung planer, großflächiger Beschichtungsfolien fehlt heute noch eine geeignete Technologie. Verfahren, bei denen strukturbildende Partikel mittels eines Trägers - wie beispielsweise eines Klebers - auf Oberflächen aufgebracht werden, haben den Nachteil, dass Oberflächen aus den verschiedensten Materialkombinationen erhalten werden, die z. B. bei Wärmebelastung unterschiedliche Ausdehnungskoeffizienten aufweisen, was zu einer Beschädigung der Oberfläche führen kann.

Verfahren zur Herstellung dieser strukturierten Oberflächen sind ebenfalls bekannt. Neben der detailgetreuen Abformung dieser Strukturen durch eine Masterstruktur im Spritzguss oder Prägeverfahren sind auch Verfahren bekannt, die das Aufbringen von Partikeln auf eine Oberfläche nutzen (US 5 599 489).

In DE 29919506 U1 wird die Anwendung der genannten Verfahren beschrieben, wobei die Oberflächen von Pipettenspitzen mikrostrukturiert werden. Die Herstellung der mikrostrukturierten Pipettenspitzen basiert hier auf einem Verfahren der Mikrosystemtechnik. Die für das Verfahren notwendige strukturierte Oberfläche ist schon aus einem anderen technischen Gebiet bekannt. Es handelt sich hierbei um selbstreinigende Oberflächen. Verfahren zu deren Herstellung sind z. B. in DE 19803787 oder DE 19914007 offenbart. Mittels der in diesen Schriften offenbarten Verfahren werden in DE 29919506 Pipettenspitzen produziert. Der Nachteil dieses Verfahrens besteht in der relativ aufwendigen und kostenintensiven Herstellung.

Aufgabe der vorliegenden Erfindung war es daher, Vorrichtungen zur Aufbewahrung von Flüssigkeiten, insbesondere Pipettenspitzen, Spritzen und Aufbewahrungsbehälter, bereitzustellen, mit denen Flüssigkeiten einfach rückstandsfrei aufgenommen und rückstandsfrei entnommen werden können. Diese Vorrichtungen sollten dabei mittels eines einfachen Verfahren hergestellt werden können, welches insbesondere ohne großen Aufwand in den normalen Herstellprozess integriert werden kann.

Überraschenderweise wurde gefunden, dass durch Aufbringen von hydrophoben, nanostrukturierten Partikeln auf eine Spritzgussform und anschließendes Spritzen eines Spritzgussteiles mit dieser Spritzgussform, die Partikel fest auf der Oberfläche des Spritzgusskörpers eingebunden werden können und dass es, wenn diese Spritzgusskörper als Vorrichtung zur Aufbewahrung von Flüssigkeiten, wie z. B. Pipetten, Pipettenspitzen, Spritzen oder Aufbewahrungsbehälter, geeignet sind, mit solchen Vorrichtungen möglich ist, auch kleinste Flüssigkeitsmengen rückstandfrei aufzubewahren bzw. aus der Vorrichtung rückstandsfrei entnehmbar sind.

Gegenstand der vorliegenden Erfindung sind Vorrichtungen, hergestellt mittels Spritzgussverfahren, zur Aufbewahrung und/oder zum Handling von Flüssigkeiten, wobei die Vorrichtungen restlos von den aufbewahrten Flüssigkeiten entleert werden können, welche dadurch gekennzeichnet sind, dass die Vorrichtung zumindest eine Oberfläche, die mit der aufzubewahrenden Flüssigkeit in Kontakt kommt, aufweist, die eine fest verankerte Lage von Mikropartikeln aufweist, welche Erhebungen bilden.

Ebenfalls Gegenstand der vorliegenden Erfindung ist ein Verfahren zur Herstellung von erfindungsgemäßen Vorrichtungen als Spritzgusskörper mit zumindest einer Oberfläche, die selbstreinigende Eigenschaften und durch Mikropartikel gebildete Erhebungen aufweist, durch Spritzgießen, welches dadurch gekennzeichnet ist, dass Mikropartikel vor einem Spritzgussschritt auf eine Spritzgussform aufgebracht werden und anschließend ein Spritzgussschritt durchgeführt wird, bei welchem die Mikropartikel in die Oberfläche des Spritzgusskörpers eingedrückt werden.

Das erfindungsgemäße Verfahren zur Herstellung von Vorrichtungen zur Aufbewahrung von Flüssigkeiten durch Spritzguss hat den Vorteil, dass es sich bereits vorhandener Gerätschaften für die Herstellung von Spritzgusskörpern bedienen kann. Üblicherweise werden Spritzgussteile mittels Spritzgussformen hergestellt, in die das Material eingespritzt wird. Das erfindungsgemäße Verfahren bedient sich dieses Verfahrens, in dem auf die Spritzgussform vor dem eigentlichen Spritzgießen Mikropartikel aufgetragen werden, die beim Spritzgießen auf das Spritzgussteil und damit die Vorrichtung übertragen werden, in dem die Partikel in die Oberfläche der Vorrichtung eingedrückt werden. Aus diese einfache Weise sind Vorrichtungen mit selbstreinigenden Oberflächen zugänglich, die Partikel mit einer zerklüfteten Struktur aufweisen, ohne dass eine zusätzliche Prägeschicht oder Fremdmaterialträgerschicht auf den Spritzgusskörper aufgebracht werden muss, die rückstandsfrei entleerbar sind.

Dadurch, dass die Vorrichtung zumindest eine Oberfläche, die mit der aufzubewahrenden Flüssigkeit in Kontakt kommt, aufweist, die eine fest verankerte Lage von Mikropartikeln aufweist, welche Erhebungen bilden und damit, insbesondere wenn die Erhebungen hydrophobiert sind, schwer von Wasser oder wässrigen Lösungen benetzbar sind, können die Vorrichtungen, wenn sie zur Aufbewahrung von Produkten in wässriger Lösung dienen, rückstandsfrei bzw. vollständig entleert werden. Dies ist in vielerlei Hinsicht vorteilhaft, z. B. weil die Entsorgung der Behältnisse nun normal als Hausmüll und nicht als Sonderabfall erfolgen kann oder weil die gesamte Menge eines in z. B. einem Reaktionsgefäß oder einer Kunststoffampulle befindlichen Präparates verabreicht werden kann. Auf diese Weise können große Mengen an teuren Präparaten eingespart werden bzw. die Dosiergenauigkeit von Medikamenten deutlich erhöht werden.

Die erfindungsgemäßen Vorrichtungen haben den Vorteil, dass strukturbildende Partikel nicht von einem Trägermaterial fixiert werden und damit eine unnötig hohe Zahl der Materialkombinationen und damit verbundenen negativen Eigenschaften vermieden wird.

Handelt es sich bei den erfindungsgemäßen Vorrichtungen um Pipettenspitzen, so haben diese, ebenso wie die im Stand der Technik beschriebenen Pipettenspitzen, den Vorteil, dass beim Pipettieren keine Flüssigkeiten an der Pipettenspitze (je nach Ausführung weder Innen noch Außen) zurückbleiben. So wird bei Aufnahme von Flüssigkeiten mit der erfindungsgemäßen Pipettenspitze erreicht, dass Außen an der Pipettenspitze keine Flüssigkeit haften bleibt und nach dem Entleeren der Pipettenspitze im Inneren der Pipette keine Flüssigkeitsreste verbleiben. Auf diese Weise wird vermieden, dass Verunreinigungen aus der Stammlösung in andere Behälter übertragen werden. Außerdem ist ein wesentlich genaueres Pipettieren möglich, da nur das gewünschte Volumen übertragen wird. Die Herstellung der Pipettenspitzen ist aber, im Vergleich zu den Verfahren gemäß dem Stand der Technik deutlich einfacher durchzuführen.

Die erfindungsgemäßen bzw. gemäß des erfindungsgemäßen Verfahrens hergestellten Pipettenspitzen erzielen also die folgenden Vorteile:
- einsetzbar auch bei Flüssigkeitsmengen kleiner 1 µl
- keine Verwendung von Druckpulsen
- keine Verwendung von antimikrobiellen Materialien
- keine "Verschleppung" von Reaktionsmedien bei Eintauchen von z. B. Pipettenspitzen oder Kapillarspitzen in Flüssigkeiten durch Reste dieser Flüssigkeiten
- hohe Volumengenauigkeit
- hohe Reproduzierbarkeit

Die erfindungsgemäßen mittels Spritzgussverfahren hergestellten Vorrichtungen zur Aufbewahrung und/oder zum Handling von Flüssigkeiten, wobei die Vorrichtungen restlos von den aufbewahrten Flüssigkeiten entleert werden können, zeichnen sich dadurch aus, dass die Vorrichtung zumindest eine Oberfläche, die mit der aufzubewahrenden Flüssigkeit in Kontakt kommt, aufweist, die eine fest verankerte Lage von Mikropartikeln aufweist, welche Erhebungen bilden. Diese Oberfläche weist flüssigkeitsabweisende Eigenschaften auf.

Die fest verankerte Lage von Mikropartikeln wird dadurch erhalten, dass vor dem Spritzgießen Mikropartikel als Schicht auf das Spritzgusswerkzeug aufgebracht wird und anschließend mit diesem Werkzeug spritzgegossen wird. Beim Spritzguss werden die Mikropartikel in die Spritzgussmasse zumindest teilweise eingedrückt und beim Erstarren der Spritzgussmasse von dieser festgehalten und damit verankert, wobei eine besonders stabile Verankerung erhalten wird, wenn Mikropartikel, die eine Feinstruktur auf der Oberfläche aufweisen, eingesetzt werden, da die Feinstruktur von der Spritzgussmasse teilweise ausgefüllt wird und nach dem Erstarren der Spritzgussmasse viele Verankerungspunkte vorhanden sind. Unter einer Lage von Mikropartikeln wird im Sinne der vorliegenden Erfindung eine Ansammlung von Mikropartikeln an der Oberfläche verstanden, die Erhebungen bilden. Die Lage kann so ausgebildet sein, dass die Oberfläche ausschließlich Mikropartikel, fast ausschließlich Mikropartikel oder aber auch Mikropartikel in einem Abstand von 0 bis 10, insbesondere 0 bis 3 Partikeldurchmessern zueinander aufweist.

Insbesondere wenn die Oberfläche mit hydrophoben Eigenschaften ausgestattet ist, ist sie schwer von Wasser oder wässrigen Lösungen benetzbar und weist damit selbstreinigende Eigenschaften auf, da Verunreinigungen durch bewegtes Wasser entfernt werden können. Unter Aufbewahrung, insbesondere der temporären Aufbewahrung kann eine spezielle Form des Handlings verstanden werden. Beim Handling von Flüssigkeiten mittels einer Vorrichtung, z. B. mit einer Pipette oder Pipettenspitze wird die Flüssigkeit üblicherweise zeitweilig in der Vorrichtung aufbewahrt, weshalb Handling im Sinne der vorliegenden Erfindung als eine temporäre Aufbewahrung verstanden werden kann und die Begriffe deshalb als äquivalent angesehen werden können.

Die erfindungsgemäßen Vorrichtungen mit Oberflächen, die flüssigkeitsabweisende Eigenschaften und Oberflächenstrukturen mit Erhebungen aufweisen, zeichnen sich dadurch aus, dass die Oberflächen vorzugsweise Kunststoffoberflächen sind, in die Mikropartikel direkt eingebunden und nicht über Trägersysteme oder ähnliches angebunden sind.

Die Vorrichtungen selbst können als Material vorzugsweise Polymere auf der Basis von Polycarbonaten, Polyoxymethylenen, Poly(meth)acrylaten, Polyamiden, Polyvinylchlorid (PVC), Polyethylenen, Polypropylenen, Polystyrolen, Polyestern, Polyethersulfonen, aliphatischen linearen- oder verzweigten Polyalkenen, cyclischen Polyalkenen, Polyacrylnitril oder Polyalkylenterephthalaten sowie deren Gemische oder Copolymere, aufweisen. Besonders bevorzugt weisen die Spritzgusskörper als Material ein Material, ausgewählt aus Poly(vinylidenfluorid), Poly(hexafluorpropylen), Poly(perfluorpropylenoxid), Poly(fluoralkylacrylat), Poly(fluoralkylmethacrylat), Poly(vinylperfluoralkylether) oder andere Polymere aus Perfluoralkoxyverbindungen, Poly(ethylen), Poly(propylen), Poly(isobuten), Poly(4-methyl-1-penten) oder Polynorbonen als Homo- oder Copolymer aufweisen. Ganz besonders bevorzugt weisen die Spritzgusskörper als Material für die Oberfläche Poly(ethylen), Poly(propylen), Polymethylmethacrylaten, Polystyrolen, Polyestern, Acrylnitril-Butadien-Styrol Terpolymere (ABS) oder Poly(vinylidenfluorid) auf.

Die Oberflächen mit flüssigkeitsabweisenden Eigenschaften weisen vorzugsweise Erhebungen, die durch die in der Oberfläche verankerten Mikropartikel gebildet werden, mit einer mittleren Höhe von 20 nm bis 25 µm und einem mittleren Abstand von 20 nm bis 25 µm, vorzugsweise mit einer mittleren Höhe von 50 nm bis 10 µm und/oder einem mittleren Abstand von 50 nm bis 10 µm und besonders bevorzugt mit einer mittleren Höhe von 50 nm bis 4 µm und/oder einen mittleren Abstand von 50 nm bis 4 µm auf. Ganz besonders bevorzugt weisen die erfindungsgemäßen Spritzgusskörper Oberflächen mit Erhebungen mit einer mittleren Höhe von 0,25 bis 1 µm und einem mittleren Abstand von 0,25 bis 1 µm auf. Unter dem mittleren Abstand der Erhebungen wird im Sinne der vorliegenden Erfindung der Abstand der höchsten Erhebung einer Erhebung zur nächsten höchsten Erhebung verstanden. Hat eine Erhebung die Form eines Kegels so stellt die Spitze des Kegels die höchste Erhebung der Erhebung dar. Handelt es sich bei der Erhebung um einen Quader, so stellte die oberste Fläche des Quaders die höchste Erhebung der Erhebung dar.

Die Benetzung von Festkörpern, die auch eine Aussage über das flüssigkeitsabweisende Verhalten gibt, lässt sich durch den Kontaktwinkel, den ein Wassertropfen mit der Oberfläche bildet, beschreiben. Ein Kontaktwinkel von 0 Grad bedeutet dabei eine vollständige Benetzung der Oberfläche. Die Messung des Kontaktwinkels an Festkörpern erfolgt in der Regel nach der Sessil Drop Methode. Ein Tropfen einer Flüssigkeit mit bekannter Oberflächenspannung wird mittels eines geeigneten Dosiersystems auf die zu charakterisierenden Festkörper aufgebracht. Anschließend wird die Kontur des Flüssigkeitstropfens optisch vermessen. Je höher der Kontaktwinkel ist, um so schlechter kann die Oberfläche benetzt werden.

Die erfindungsgemäßen Vorrichtungen, insbesondere Pipettenspitzen und Aufbewahrungsbehälter mit flüssigkeits- insbesondere wasserabweisender Oberfläche weisen vorzugsweise ein hohes Aspektverhältnis der Erhebungen auf. Vorzugsweise weisen die Erhebungen auf den mit der Flüssigkeit in Kontakt tretenden Oberfläche ein Aspektverhältnis der Erhebungen von größer 0,15 auf. Vorzugsweise weisen die Erhebungen, die durch die Mikropartikel selbst gebildet werden, ein Aspektverhältnis von 0,3 bis 0,9 auf, besonders bevorzugt von 0,5 bis 0,8 auf. Das Aspektverhältnis ist dabei definiert als der Quotient von maximaler Höhe zur maximalen Breite der Struktur der Erhebungen.

Die Partikel werden an die Oberfläche der Vorrichtung angebunden bzw. verankert in dem die Partikel beim Spritzgießen in das Material des Spritzgusskörpers eingedrückt werden. Um die genannten Aspektverhältnisse zu erzielen ist es vorteilhaft, wenn zumindest ein Teil der Partikel, vorzugsweise mehr als 50 % der Partikel, vorzugsweise nur bis zu 90 % ihres Durchmessers in die Oberfläche des Spritzgusskörpers eingedrückt werden. Die Oberfläche weist deshalb bevorzugt Partikel auf, die mit 10 bis 90 %, bevorzugt 20 bis 50 % und ganz besonders bevorzugt von 30 bis 40 % ihres mittleren Partikeldurchmessers in der Oberfläche verankert sind und damit mit Teilen ihrer inhärent zerklüfteten Oberfläche noch aus den Spritzgussteilen herausragen. Auf diese Weise ist gewährleistet, dass die Erhebungen, die durch die Partikel selbst gebildet werden, ein genügend großes Aspektverhältnis von vorzugsweise zumindest 0,15 aufweisen. Auf diese Weise wird außerdem erreicht, dass die fest verbundenen Partikel sehr haltbar mit der Oberfläche der Vorrichtung verbunden sind. Das Aspektverhältnis ist hierbei definiert als das Verhältnis von maximaler Höhe zu maximaler Breite der Erhebungen. Ein als ideal kugelförmiger angenommener Partikel, der zu 70 % aus der Oberfläche des Spritzgusskörpers herausragt weist gemäß dieser Definition ein Aspektverhältnis von 0,7 auf. Es sei explizit darauthingewiesen, dass die erfindungsgemäßen Partikel keine kugelige Form aufweisen müssen.

Die mit der, mit der Flüssigkeit in Kontakt kommenden Oberfläche, fest verbundenen Mikropartikel, die die Erhebungen auf der Oberfläche der Vorrichtung bilden, sind vorzugsweise ausgewählt aus Silikaten, Mineralien, Metalloxiden, Metallpulvern, Kieselsäuren, Pigmenten oder Polymeren, ganz besonders bevorzugt aus pyrogenen Kieselsäuren, Fällungskieselsäuren, Aluminiumoxid, Siliziumoxid, dotierten Silikaten, pyrogenen Silikaten oder pulverförmige Polymeren.

Bevorzugte Mikropartikel weisen einen Partikeldurchmesser von 0,02 bis 100 µm besonders bevorzugt von 0,1 bis 50 µm und ganz besonders bevorzugt von 0,1 bis 30 µm auf. Geeignete Mikropartikel können aber auch einen Durchmesser von kleiner als 500 nm aufweisen oder sich aus Primärteilchen zu Agglomeraten oder Aggregaten mit einer Größe von 0,2 bis 100 µm zusammenlagern.

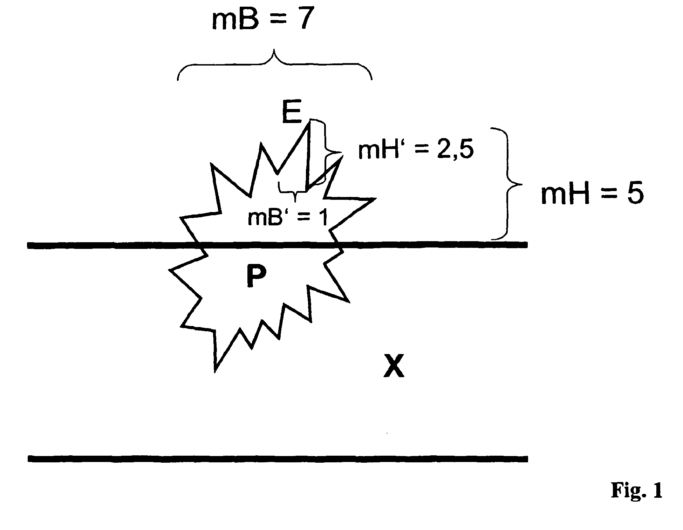

Besonders bevorzugte Mikropartikel, welche die Erhebungen der strukturierten Oberfläche bilden, sind solche, die eine unregelmäßige Feinstruktur im Nanometerbereich auf der Oberfläche aufweisen. Dabei weisen die Mikropartikel mit der unregelmäßigen Feinstruktur vorzugsweise Erhebungen mit einem Aspektverhältnis von größer 1, besonders bevorzugt größer 1,5 auf. Das Aspektverhältnis ist wiederum definiert als Quotient aus maximaler Höhe zu maximaler Breite der Erhebung. In Fig. 1 wird der Unterschied der Erhebungen, die durch die Partikel gebildet werden und die Erhebungen, die durch die Feinstruktur gebildet werden schematisch verdeutlicht. Die Figur zeigt die Oberfläche eines Spritzgusskörpers **X**, die Partikel **P** aufweist (Zur Vereinfachung der Darstellung ist nur ein Partikel abgebildet). Die Erhebung, die durch den Partikel selbst gebildet wird, weist ein Aspektverhältnis von ca. 0,71 auf, berechnet als Quotient aus der maximalen Höhe des Partikels **mH**, die 5 beträgt, da nur der Teil des Partikels einen Beitrag zur Erhebung leistet, der aus der Oberfläche des Spritzgusskörpers **X** herausragt, und der maximalen Breite **mB**, die im Verhältnis dazu 7 beträgt. Eine ausgewählte Erhebung der Erhebungen **E**, die durch die Feinstruktur der Partikel auf den Partikeln vorhanden sind, weist ein Aspektverhältnis von 2,5 auf, berechnet als Quotient aus der maximalen Höhe der Erhebung **mH',** die 2,5 beträgt und der maximalen Breite **mB',** die im Verhältnis dazu 1 beträgt.

Bevorzugte Mikropartikel, die eine unregelmäßige Feinstruktur im Nanometerbereich an der Oberfläche aufweisen, sind solche Partikel, die zumindest eine Verbindung, ausgewählt aus pyrogener Kieselsäure, Fällungskieselsäuren, Aluminiumoxid, Siliziumdioxid, pyrogenen und/oder dotierten Silikaten oder pulverförmige Polymeren aufweisen.

Es kann vorteilhaft sein, wenn die Mikropartikel hydrophobe Eigenschaften aufweisen, wobei die hydrophoben Eigenschaften auf die Materialeigenschaften der an den Oberflächen der Partikel vorhandenen Materialien selbst zurückgehen können oder aber durch eine Behandlung der Partikel mit einer geeigneten Verbindung erhalten werden kann. Die Mikropartikel können vor oder nach dem Aufbringen bzw. Anbinden auf bzw. an die Oberfläche der Vorrichtung bzw. des Spritzgusskörpers mit hydrophoben Eigenschaften ausgestattet worden sein.

Zur Hydrophobierung der Mikropartikel vor oder nach dem Aufbringen und Eindrücken (Verankern) in die Oberfläche des Spritzgusskörpers können diese mit einer zur Hydrophobierung geeigneten Verbindung z. B. aus der Gruppe der Alkylsilane, der Fluoralkylsilane oder der Disilazane, wie sie beispielweise unter dem Namen Dynasylan von der Degussa AG angeboten werden, behandelt werden.

Im Folgenden werden ganz bevorzugte Mikropartikel näher erläutert. Die Partikel können aus unterschiedlichen Bereichen kommen. Beispielsweise können es Silikate sein, dotierte Silikate, Mineralien, Metalloxide, Aluminiumoxid, Kieselsäuren oder pyrogene Silikate, Aerosile oder pulverförmige Polymere, wie z. B. sprühgetrocknete und agglomerierte Emulsionen oder cryogemahlenes PTFE. Als Partikelsysteme eignen sich im Besonderen hydrophobierte pyrogene Kieselsäuren, sogenannte Aerosile. Zur Generierung der selbstreinigenden Oberflächen ist neben der Struktur auch eine Hydrophobie nötig. Die eingesetzten Partikel können selbst hydrophob sein, wie beispielsweise pulverförmiges Polytetrafluorethylen (PTFE). Die Partikel können hydrophob ausgerüstet sein, wie beispielsweise das Aerosil VPR 411 oder Aerosil R 8200. Sie können aber auch nachträglich hydrophobiert werden. Hierbei ist es unwesentlich, ob die Partikel vor dem Auftragen oder nach dem Auftragen hydrophobiert werden. Solche zu hydrophobierenden Partikel sind beispielsweise Aeroperl 90/30® , Sipernat Kieselsäure 350® , Aluminiumoxid C® , Zirkonsilikat, vanadiumdotiert oder Aeroperl P 25/20® . Bei letzteren erfolgt die Hydrophobierung zweckmäßig durch Behandlung mit Perfluoralkylsilanverbindungen und anschließender Temperung.

Es kann vorteilhaft sein, wenn die Oberflächen der Vorrichtungen, die flüssigkeitsabweisende Eigenschaften aufweisen, die Erhebungen auf einer Überstruktur mit einer mittleren Höhe von 10 µm bis 1 mm und einem mittleren Abstand von 10 µm bis 1mm aufgebracht aufweisen.

Vorzugsweise sind die Oberflächen mit flüssigkeitsabweisenden Eigenschaften hydrophob, wobei das unstrukturierte Material eine Oberflächenenergie weniger als 35 mN/m, bevorzugt von 10 bis 20 mN/m aufweist.

Es kann außerdem vorteilhaft sein, wenn die erfindungsgemäßen Vorrichtungen nicht nur Oberflächen oder Teilbereiche davon aufweisen, die flüssigkeitsabweisend sind sondern auch Oberflächen oder Teilbereiche davon, die benetzende Eigenschaften aufweisen. Dies kann durch unterschiedliche Oberflächenstrukturen, einer unterschiedlichen Grenzflächenchemie oder einer Kombination von beidem auf den jeweiligen Bereichen erreicht werden wie z. B.:
- die flüssigkeitsbenetzenden Teilbereiche weisen die gleiche Oberflächenchemie, jedoch unterschiedliche Erhebungen als die übrige Oberfläche auf In diesem Fall unterscheidet sich die Oberflächenchemie über die gesamte Oberfläche nicht. Im Idealfall besitzen die flüssigkeitsbenetzenden Teilbereiche keine Erhebungen.
- die flüssigkeitsbenetzenden und flüssigkeitsabweisenden Bereiche weisen gleichstrukturierte Erhebungen und eine unterschiedliche Oberflächenchemie auf. In diesem Fall weisen die flüssigkeitsbenetzenden Teilbereiche eine höhere Oberflächenenergie als die flüssigkeitsabweisenden Teilbereiche der Oberfläche, jeweils bestimmt am unstrukturierten Material auf. Eine solche Ausgestaltung der Oberfläche kann z. B. dadurch erreicht werden, dass nur bestimmte Teilbereiche mit Hydrophobierungsagenzien behandelt wurden.

Die erfindungsgemäßen Vorrichtungen eignen sich daher auch hervorragend zur Aufbewahrung von biologischen oder pharmazeutischen Erzeugnissen, bei denen Flüssigkeiten auf kleine Bereiche aufgeteilt werden müssen und/oder sich die Flüssigkeit auf den flüssigkeitsbenetzenden Bereiche durch leichtes Erschüttern oder durch leichte Neigung des Behälters sammelt.

Ein weiterer Anwendungsbereich der erfindungsgemäßen Vorrichtungen ist der Bereich der Biotechnik. Bakterien und andere Mikroorganismen benötigen zur Adhäsion an einer Oberfläche oder zur Vermehrung an einer Oberfläche Wasser, welches an den hydrophoben Oberflächen der vorliegenden Erfindung nicht zur Verfügung steht. Die strukturierten Oberflächen der erfindungsgemäßen Vorrichtung verhindern das Anwachsen von Bakterien und anderen Mikroorganismen an den flüssigkeitsabweisenden Bereichen; sie sind somit auch bakteriophob und/oder antimikrobiell. Die erfindungsgemäß in Teilbereichen strukturierten (flüssigkeitsabweisenden) bzw. unstrukturierten (flüssigkeitsbenetzenden) Vorrichtungen ermöglichen jedoch unter entsprechenden Rahmenbedingungen, wie Luftfeuchtigkeit und Temperatur ein ortsdefiniertes Wachstum von Bakterien und anderen Mikroorganismen an den benetzbaren Teilbereichen. Da der zugrundeliegende Effekt nicht auf antimikrobiellen Wirkstoffen beruht, sondern auf einem physikalischen Effekt, ist eine Beeinträchtigung des Wachstums von Bakterien und anderen Mikroorganismen auf den flüssigkeitsbenetzenden Teilbereichen durch die flüssigkeitsabweisenden Bereiche z. B. durch Ausbluten und/oder Diffusion von Wirkstoffen ausgeschlossen.

Erfindungsgemäße Oberflächen oder Teilbereiche von Oberflächen, mit flüssigkeitsabweisenden Eigenschaften weisen eine Kontaktwinkel mit Wasser von vorzugsweise größer 130 °, bevorzugt größer 145 °, besonders bevorzugt größer 160 ° auf. Weisen die Vorrichtungen Oberflächen oder Teilbereiche von Oberflächen mit flüssigkeitsbenetzenden Eigenschaften auf, so weisen diese vorzugsweise einen Kontaktwinkel mit Wasser von vorzugsweise kleiner 25 °, bevorzugt kleiner 15 ° und besonders bevorzugt gleich 0 ° auf.

Die Vorrichtungen können die Erhebungen wie beschrieben auf allen mit Flüssigkeit in Kontakt kommenden Oberflächen oder nur auf bestimmten Oberflächen aufweisen. Vorzugsweise weisen die erfindungsgemäßen Vorrichtungen, insbesondere wenn es sich um Pipettenspitzen handelt, die Erhebungen auf der inneren Oberfläche der Pipettenspitzen, auf der äußeren Oberfläche der Pipettenspitzen und/oder auf dem Pipettenspitzenauslaß aufgebracht auf. Durch die erfindungsgemäßen Erhebungen auf den äußeren Oberflächen der Pipettenspitzen wird verhindert, dass Flüssigkeit aus einem Vorratsgefäß in Form von Tropfen an den Außenseiten der Pipettenspitze transportiert wird. Durch die erfindungsgemäßen Erhebungen auf den inneren Oberflächen der Pipettenspitzen wird verhindert, dass Flüssigkeit beim Ausstoß der Flüssigkeit aus der Pipettenspitze in dieser zurückbleibt. Durch die erfindungsgemäßen Erhebungen auf dem Pipettenspitzenauslaß wird die Abgabe der zu pipettierenden Flüssigkeit deutlich vereinfacht.

Erfindungsgemäße Vorrichtungen in Form von Pipettenspitzen sind insbesondere geeignet zum Pipettieren kleiner Volumina. So können mit den Pipettenspitzen insbesondere Volumina von 10 nl bis 10 ml, vorzugsweise Volumina von 10 nl bis 10 µl, besonders bevorzugt von 10 nl bis 100 nl, von 100 nl bis 1 µl oder von 1 µl bis 10 µl und ganz besonders bevorzugt von 100 nl bis 500 nl pipettiert werden. Ganz besonders bevorzugt beträgt der Fehler des pipettierten Volumens kleiner 20 %, vorzugsweise kleiner 10 % und ganz besonders bevorzugt kleiner 1 %.

Die erfindungsgemäßen Vorrichtungen werden vorzugsweise gemäß dem erfindungsgemäßen Verfahren zur Herstellung von erfindungsgemäßen Vorrichtungen als Spritzgusskörper mit zumindest einer Oberfläche, die selbstreinigende Eigenschaften und durch Mikropartikel gebildete Erhebungen aufweist, durch Spritzgießen hergestellt, welches dadurch gekennzeichnet ist, dass Mikropartikel vor einem Spritzgussschritt auf eine Spritzgussform aufgebracht werden und anschließend ein Spritzgussschritt durchgeführt wird, bei welchem die Mikropartikel in die noch nicht erstarrte Oberfläche des Spritzgusskörpers bzw. der Vorrichtung eingedrückt werden. Die Spritzgussform ist vorzugsweise eine Form, die für die Herstellung von herkömmlichen Vorrichtungen üblicherweise verwendet wird. Es kann vorteilhaft sein, wenn die Mikropartikel nicht auf der gesamten Spritzgussform aufgebracht werden sondern nur auf Teilbereichen. Auf diese Weise sind Oberflächen erhältlich, die unterschiedliche Eigenschaften in Teilbereichen ihrer Oberfläche aufweisen.

Das Eindrücken erfolgt vorzugsweise so, dass zumindest ein Teil der Partikel, vorzugsweise zumindest 50 %,bevorzugt 75 % der Partikel nur zu maximal 90 % ihres Durchmessers, vorzugsweise mit 10 bis 70 %, bevorzugt mit 20 bis 50 % und ganz besonders bevorzugt mit 30 bis 40 % ihres mittleren Partikeldurchmessers in die Oberfläche des Spritzgusskörpers eingedrückt werden.

Als Material für das erfindungsgemäße Verfahren können alle zum Spritzgießen von Spritzgusskörpern geeigneten Polymere eingesetzt werden. Bevorzugt werden als Materialien für das Spritzgießen Polymere oder Polymerblends eingesetzt, die ein Polymer auf der Basis von Polycarbonaten, Polyoxymethylenen, Poly(meth)acrylaten, Polyamiden, Polyvinylchlorid, Polyethylenen, Polypropylenen, aliphatischen linearen- oder verzweigten Polyalkenen, cyclischen Polyalkenen, Polystyrolen, Polyestern, Polyethersulfonen, Polyacrylnitril oder Polyalkylenterephthalaten, Poly(vinylidenfluorid), Poly(hexafluorpropylen), Poly(perfluorpropylenoxid), Poly(fluoralkylacrylat), Poly(fluoralkylmethacrylat), Poly(vinylperfluoralkylether) oder andere Polymere aus Perfluoralkoxyverbindungen, Poly(isobuten), Poly(4-methyl-1-penten), Polynorbonen als Homo- oder Copolymer oder deren Gemische, aufweisen. Ganz besonders bevorzugt werden als Material für das Spritzgießen Polymere oder Polymerblends eingesetzt, die ein Polymer auf Basis von Poly(ethylen), Poly(propylen), Polymethylmethacrylaten, Polystyrolen, Polyestern, Acrylnitril-Butadien-Styrol Terpolymere (ABS) oder Poly(vinylidenfluorid) aufweisen.

Die Mikropartikel, die in dem erfindungsgemäßen Verfahren in die Oberfläche bzw. Teilbereiche der Oberfläche der Vorrichtung eingedrückt werden, werden vor dem Eindrücken durch das Spritzgießen auf die Oberfläche der Spritzgussform aufgebracht. Das Aufbringen kann durch Besprühen oder Bestreuen erfolgen, vorzugsweise erfolgt das Aufbringen durch Besprühen. Das Aufbringen der Mikropartikel auf die Spritzgussform ist insbesondere auch deshalb vorteilhaft, weil das Mikropulver verhindert, dass nach Beendigung des Spritzgussvorganges das Material des Spritzgusskörpers an der Form anhaftet, da das Material selbst kaum bzw. gar nicht mit der Form in Kontakt kommt, da die Mikropartikel zur Erzielung der bevorzugten Abstände der Erhebungen sehr dicht auf die Form aufgebracht werden.

Das Aufsprühen der Mikropartikel auf die Form kann z. B. durch Aufsprühen von Mikropartikelpulvern aufweisenden Aerosolen oder Dispersionen, die neben den Mikropartikeln ein Treibmittel oder ein, vorzugsweise leicht flüchtiges Lösemittel aufweisen, erfolgen, wobei das Aufsprühen von Suspensionen bevorzugt ist. Als Lösemittel weisen die eingesetzten Suspensionen vorzugsweise einen Alkohol, insbesondere Ethanol oder Isopropanol, Ketone, wie z. B. Aceton oder Methylethylketon, Ether, wie z. B. Diisopropylether, oder auch Kohlenwasserstoffe wie Cyclohexan auf. Ganz besonders bevorzugt weisen die Suspensionen Alkohole auf. Es kann vorteilhaft sein, wenn die Suspension von 0,1 bis 10, bevorzugt von 0,25 bis 7,5 und ganz besonders bevorzugt von 0,5 bis 5 Gew.-% Mikropartikel bezogen auf das Gesamtgewicht der Suspension aufweist. Insbesondere bei dem Aufsprühen einer Dispersion kann es vorteilhaft sein, wenn das Spritzgusswerkzeug eine Werkzeugoberflächentemperatur von 30 bis 150 °C aufweist. Je nach herzustellendem Spritzgusskörper bzw. dem dafür verwendeten Material kann die Form aber auch unabhängig vom Mikropartikelpulver bzw. dem Aufbringen des Mikropartikelpulvers eine Temperatur im genannten Bereich aufweisen.

Der Druck mit dem das Material in die Spritzgussform gespritzt wird beträgt vorzugsweise größer 40 bar, ist aber, ebenso wie andere beim Spritzgießen zu beachtenden Parameter, wie z. B. Temperatur von der Art des zum Spritzgießen verwendeten Polymeren sowie von der verwendeten Geometrie des Spritzgussteiles abhängig. Das Ermitteln der Spritzgussparametergehört zum Wissen eines Fachmanns und wird beispielsweise in "Technologie des Spritzengießen" von W. Michaeli, Hanser 1993 oder in "Reaction Injection Molding Machinery and Processes" von F.M. Sweeney, Dekker 1987 genau beschrieben.

Als Mikropartikel werden in dem erfindungsgemäßen Verfahren vorzugsweise solche eingesetzt, die zumindest ein Material, ausgewählt aus Silikaten, Mineralien, Metalloxiden, Metallpulvern, Kieselsäuren, Pigmenten oder Polymeren aufweisen. Vorzugsweise werden Mikropartikel eingesetzt, die einen Partikeldurchmesser von 0,02 bis 100 µm, besonders bevorzugt von 0,1 50 µm und ganz besonders bevorzugt von 0,1 bis 30 µm aufweisen. Es können auch Mikropartikel mit Durchmessern von kleiner als 500 nm eingesetzt werden. Geeignet sind aber auch Mikropartikel, die sich aus Primärteilchen zu Agglomeraten oder Aggregaten mit einer Größe von 0,2 bis 100 µm zusammenlagern.

Bevorzugt werden als Mikropartikel, insbesondere als Partikel, die eine unregelmäßige Feinstruktur im Nanometerbereich an der Oberfläche aufweisen, solche Partikel eingesetzt, die zumindest eine Verbindung, ausgewählt aus pyrogener Kieselsäure, Fällungskieselsäuren, Aluminiumoxid, Mischoxiden, pyrogenen und/oder dotierten Silikaten oder pulverförmige Polymeren aufweisen. Bevorzugte Partikel, die eine unregelmäßige Feinstruktur im Nanometerbereich an der Oberfläche aufweisen, weisen durch diese Feinstruktur auf der Oberfläche Erhebungen auf, die ein Aspektverhältnis von größer 1, besonders bevorzugt größer 1,5 und ganz besonders bevorzugt größer 2,5 aufweisen. Das Aspektverhältnis ist wiederum definiert als Quotient aus maximaler Höhe zu maximaler Breite der Erhebung.

Vorzugsweise weisen die Mikropartikel hydrophobe Eigenschaften auf, wobei die hydrophoben Eigenschaften auf die Materialeigenschaften der an den Oberflächen der Partikel vorhandenen Materialien selbst zurückgehen können oder aber durch eine Behandlung der Partikel mit einer geeigneten Verbindung erhalten werden kann. Die Partikel können vor oder nach dem Eindrücken in die Oberfläche mit hydrophoben Eigenschaften ausgestattet werden. Zur Hydrophobierung der Mikropartikel vor oder nach dem Eindrücken (Verankern) in die Oberfläche des Spritzgusskörpers können diese mit einer Verbindung aus der Gruppe der Alkylsilane, der Fluoralkylsilane oder der Disilazane, wie sie beispielweise unter dem Namen Dynasylan von der Degussa AG angeboten werden, behandelt werden. Die genannten Verbindungen können auch zur Veränderung der Oberflächenchemie bzw. der Oberflächeneigenschaften in Teilbereichen der Oberfläche der erfindungsgemäßen Vorrichtungen eingesetzt werden.

Im Folgenden werden die bevorzugt eingesetzten Mikropartikel näher erläutert. Die eingesetzten Partikel können aus unterschiedlichen Bereichen kommen. Beispielsweise können es Silikate sein, dotierte Silikate, Mineralien, Metalloxide, Aluminiumoxid, Kieselsäuren oder pyrogene Silikate, Aerosile® oder pulverförmige Polymere, wie z. B. sprühgetrocknete und agglomerierte Emulsionen oder cryogemahlenes PTFE. Als Partikelsysteme eignen sich im Besonderen hydrophobierte pyrogene Kieselsäuren, sogenannte Aerosile. Zur Generierung der selbstreinigenden Oberflächen ist neben der Struktur auch eine Hydrophobie nötig. Die eingesetzten Partikel können selbst hydrophob sein, wie beispielsweise das PTFE. Die Partikel können hydrophob ausgerüstet sein, wie beispielsweise das Aerosil VPR 411® oder Aerosil R 8200® . Sie können aber auch nachträglich hydrophobiert werden. Hierbei ist es unwesentlich, ob die Partikel vor dem Auftragen oder nach dem Auftragen hydrophobiert werden. Solche zu hydrophobierenden Partikel sind beispielsweise Aeroperl 90/30® , Sipernat Kieselsäure 350® , Aluminiumoxid C® , Zirkonsilikat, vanadiumdotiert oder Aeroperl P 25/20® . Bei letzteren erfolgt die Hydrophobierung zweckmäßig durch Behandlung mit Perfluoralkylsilanverbindungen und anschließender Temperung.

Es kann vorteilhaft sein, wenn die erfindungsgemäßen Vorrichtungen die Erhebungen auf einer Überstruktur mit einer mittleren Höhe von 10 µm bis 1 mm und einem mittleren Abstand von 10 µm bis 1mm aufgebracht aufweisen.
Die erfindungsgemäßen Vorrichtungen zur Aufbewahrung, insbesondere zur temporären Aufbewahrung von Flüssigkeiten können z. B. Behälter, Gefäße, Flaschen, Ampullen, Pipetten, Pipettenspitzen, verschließbare Hütchen, Reaktionsgefäße, Titerplatten, insbesondere Mikrotiterplatten oder ähnliches sein.

Eine mögliche Anwendung von erfindungsgemäßen Behältern findet sich z. B. in der Biotechnologie: Hochwertige Peptide und andere biologische Substanzen werden üblicherweise in sogenannten "Eppendorf"-Hütchen (verschließbare Hütchen) aufbewahrt. Diese Aufbewahrungsbehälter sind üblicherweise aus Polyethylen hergestellt und besitzen ein Fassungsvermögen von einigen 100 µL bis einigen mL. Durch ein Verschlusssystem können diese Behälter abgedichtet und gegebenenfalls tiefgefroren werden. Aufgrund der Lagerbedingungen lagert sich die flüssige Substanz in der Regel statistisch verteilt an den Oberflächen an. Für eine vollständige Probenentnahme ist aber die Ansammlung der Substanz an einem Punkt wünschenswert. Hier kann die beschriebene Erfindung Unterstützung leisten. Durch eine erfindungsgemäße Mikrostrukturierung der inneren Oberflächen, ist es möglich, dass sich die gesamte Substanz am tiefsten Punkt des Behälters sammelt und zur vollständigen Entnahme bereitsteht. Außerdem sind Reaktionsgefäß oder Mikrotiterplatte mit der erfindungsgemäßen Mikrostrukturierung der inneren Oberflächen auszustatten. Dies ermöglicht eine vollständige Entleerung der Gefäße, die auch als Zwischenspeicher für chemische Substanzen beim Screening dienen können.

Die Verwendung der erfindungsgemäßen Vorrichtung ist aber auch im Umweltschutz bei der Verwendung toxischer Substanzen denkbar. Des weiteren sind Aufbewahrungsbehälter für Medikamente mit einer parentaralen Darreichungsform herstellbar, deren innere Oberflächen eine Mikrostrukturierung aufweist.

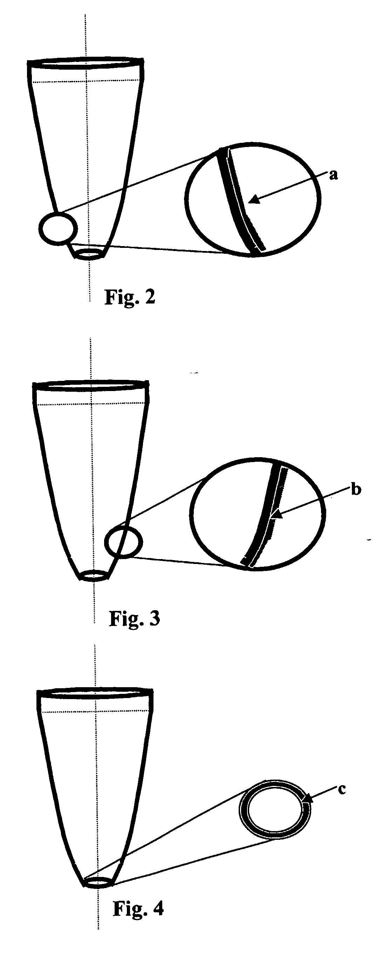

Die Erfindung wird an Hand der Figuren Fig. 1 bis 5 näher erläutert ohne darauf beschränkt zu sein.

Die Figur Fig. 1 zeigt schematisch die Oberfläche einer Pipette **X**, die Partikel **P** aufweist (Zur Vereinfachung der Darstellung ist nur ein Partikel abgebildet.). Die Erhebung, die durch den Partikel selbst gebildet wird, weist ein Aspektverhältnis von ca. 0,71 auf, berechnet als Quotient aus der maximalen Höhe des Partikels **mH**, die 5 beträgt, da nur der Teil des Partikels einen Beitrag zur Erhebung leistet, der aus der Oberfläche der Pipette **X** herausragt, und der maximalen Breite **mB**, die im Verhältnis dazu 7 beträgt. Eine ausgewählte Erhebung der Erhebungen **E**, die durch die Feinstruktur der Partikel auf den Partikeln vorhanden sind, weist ein Aspektverhältnis von 2,5 auf, berechnet als Quotient aus der maximalen Höhe der Erhebung **mH'**, die 2,5 beträgt und der maximalen Breite **mB'**, die im Verhältnis dazu 1 beträgt.

Wie an Hand der Figuren Fig. 2 bis Fig. 4 zu erkennen ist, können die Strukturierung, d. h. die Erhebungen, auf der inneren (a in Fig. 2) oder der äußeren Oberfläche der Pipettenspitze (b in Fig. 3) aufgebracht sein. Es ist auch möglich, die Erhebungen nur auf das Ende der Pipettenspitze, d. h. auf den Pipettenauslass (c in Fig. 4) aufzubringen.

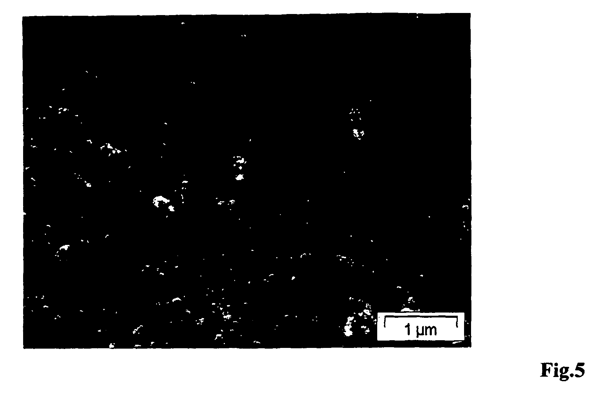

Die Figur Fig. 5 stellt eine rasterelektronenmikroskopische (REM) Aufnahme einer Oberfläche einer Pipettenspitze dar, die eine gemäß Beispiel 1 modifizierte Oberfläche aufweist. Das Bild zeigt eine gleichmäßige Verteilung der Partikel auf der Oberfläche, die fest in der erstarrten Polymermasse verankert sind. Bemerkenswert ist, dass eine Orientierungsrichtung der Partikel, die durch das Wandern der Polymerschmelze an der Gussform zu erwarten wäre, nicht erkennbar ist. Im Vergleich zu nicht strukturierten Pipettenspitzen konnten Volumina pipettiert werden, die mindestens um den Faktor 10 kleiner sind.

Das erfindungsgemäße Verfahren wird an Hand der nachfolgenden Beispiele beschrieben, ohne dass die Erfindung auf dieses Ausführungsbeispiel beschränkt sein soll.

### Beispiel 1:

Auf eine Spritzgussform für Pipettenspitzen wurde eine Suspension von 1 Gew.-% Aerosil R8200 in Ethanol aufgebracht und das Lösemittel anschließend bei 60 °C verdampft. Mit der so vorbereiteten Spritzgussform wurde bei einer Temperatur von 60 °C und einem Druck von 90 bar mit einer Spritzgussmaschine (Typ ES 150/50, Engel) ein Spritzgusskörper aus Polyethylen spritzgegossen. Der aus der Spritzgussform erhaltene Spritzgusskörper wies in die Oberfläche eingedrückte Partikel auf, die zu mehr als 50 % mit 30 bis 40 % ihres Durchmessers in der Oberfläche verankert war. An den so hergestellten Spritzgusskörpers wurde das kleinste zu pipettierende Volumen für einen Wassertropfen bestimmt. Es zeigte sich, dass schon Tropfen mit einem Volumen von 0,5 µl sich selbständig von der Spitze lösten.

### Beispiel 2:

Medikamente, die intravenös oder subkutan verabreicht werden, werden in Ampullen oder kleinen Container aufbewahrt. Die gebrauchsfertige Lösung übersteigt hier selten 1 mL. An den Oberflächen dieser Behältnisse lagern sich durch Erschütterungen immer wieder kleine Tropfen an. Bei der Entnahme der Flüssigkeit mit einer Nadel bleiben diese Tropfen häufig an den Wänden zurück und reduzieren so die verfügbare Lösung um bis zu 10 %. Hierdurch entsteht bei Medikamenten eine relativ hohe Dosierungsungenauigkeit und bei sehr wertvollen Lösungen mitunter ein hoher wirtschaftlicher Schaden.

Werden die Spritzgusswerkzeuge, die zur Produktion der Aufbewahrungsbehälter mittels Spritzguss verwendet werden, zuvor mit einer Suspension von 1 Gew.-% Aerosil in Ethanol eingesprüht, weisen die Behälter diese Nachteile nicht mehr auf. An den Oberflächen bleiben keine Rückstände haften und die gesamte Flüssigkeitsmenge kann entnommen werden.

## Patentansprüche

1. Vorrichtung, hergestellt mittels Spritzgussverfahren, zur Aufbewahrung und/oder zum Handling von Flüssigkeiten, wobei die Vorrichtung restlos von den aufbewahrten Flüssigkeiten entleert werden können,
**dadurch gekennzeichnet,**
**dass** die Vorrichtung zumindest eine Oberfläche, die mit der aufzubewahrenden Flüssigkeit in Kontakt kommt, aufweist, die eine fest verankerte Lage von Mikropartikeln aufweist, welche Erhebungen bilden und die Mikropartikeln durch einen Spritzgussschritt in die Oberfläche eingedrückt werden.

2. Vorrichtung nach Anspruch 1,
**dadurch gekennzeichnet,**
**dass** die Erhebungen eine mittlere Höhe von 20 nm bis 25 µm und einen mittleren Abstand von 20 nm bis 25 µm aufweisen.

3. Vorrichtung nach Anspruch 1 oder 2,
**dadurch gekennzeichnet,**
**dass** die Erhebungen eine mittlere Höhe von 50 nm bis 4 µm und/oder einen mittleren Abstand von 50 nm bis 4 µm aufweisen.

4. Vorrichtung nach einem der Ansprüche 1 bis 3,
**dadurch gekennzeichnet,**
**dass** die Erhebungen, die durch die Partikel selbst gebildet werden, ein Aspektverhältnis von 0,3 bis 0,9 aufweisen.

5. Vorrichtung nach einem der Ansprüche 1 bis 4,
**dadurch gekennzeichnet,**
**dass** die Mikropartikel nanostrukturierte Mikropartikel sind, die eine Feinstruktur mit Erhebungen mit einem Aspektverhältnis von größer 1 aufweisen.

6. Vorrichtung nach einem der Ansprüche 1 bis 5,
**dadurch gekennzeichnet,**
**dass** die Mikropartikel, ausgewählt sind aus Partikeln von Silikaten, Mineralien, Metalloxiden, Metallpulvern, Kieselsäuren, Pigmenten und/oder Polymeren.

7. Vorrichtung nach einem der Ansprüche 1 bis 6,
**dadurch gekennzeichnet,**
**dass** die Mikropartikel ausgewählt sind aus Partikeln von pyrogenen Kieselsäuren, Fällungskieselsäuren, Aluminiumoxid, Siliziumoxid, dotierten Silikaten, pyrogenen Silikaten oder pulverförmige Polymeren.

8. Vorrichtung nach einem der Ansprüche 1 bis 7,
**dadurch gekennzeichnet,**
**dass** die Mikropartikel hydrophobe Eigenschaften aufweisen.

9. Vorrichtung nach einem der Ansprüche 1 bis 8,
**dadurch gekennzeichnet,**
**dass** die Vorrichtung selbst ein Material, ausgewählt aus Polycarbonaten, Polyoxymethylenen, Poly(meth)acrylaten, Polyamiden, Polyvinylchlorid, Polyethylenen, Polypropylenen, aliphatischen linearen- oder verzweigten Polyalkenen, cyclischen Polyalkenen, Polystyrolen, Polyestern, Polyethersulfonen, Polyacrylnitril oder Polyalkylenterephthalaten, Poly(trifluorethylen), Poly(vinylidenfluorid), Poly(chlortrifluorethylen), Poly(hexafluorpropylen), Poly(perfluorpropylenoxid), Poly(fluoralkylacrylat), Poly(fluoralkylmethacrylat), Poly(vinylperfluoralkylether) oder andere Polymere aus Perfluoralkoxyverbindungen, Poly(isobuten), Poly(4-methyl-1-penten), Polynorbornen als Homo- oder Copolymer sowie deren Gemische, aufweist.

10. Vorrichtung nach einem der Ansprüche 1 bis 9,
**dadurch gekennzeichnet,**
**dass** die eingedrückten Partikel mit 10 bis 90 % ihres mittleren Partikeldurchmessers in der Oberfläche verankert sind.

11. Vorrichtung nach einem der Ansprüche 1 bis 5,
**dadurch gekennzeichnet,**
**dass** die Mikropartikel eine mittlere Partikelgröße (Durchmesser) von 0,02 bis 100 µm aufweisen.

12. Vorrichtung nach einem der Ansprüche 1 bis 11,
**dadurch gekennzeichnet,**
**dass** die Vorrichtung eine Pipettenspitze, eine Pipette, eine Spritze, eine Kunststoffampulle, ein Gefäß, ein Reaktionsgefäß, ein verschließbares Hütchen oder eine Mikrotiterplatte ist.

13. Verfahren zur Herstellung von Vorrichtungen gemäß einem der Ansprüche 1 bis 12 als Spritzgusskörper mit zumindest einer Oberfläche, die selbstreinigende Eigenschaften und durch Mikropartikel gebildete Erhebungen aufweist, durch Spritzgießen,
**dadurch gekennzeichnet,**
**dass** Mikropartikel vor einem Spritzgussschritt auf eine Spritzgussform aufgebracht werden und anschließend ein Spritzgussschritt durchgeführt wird, bei welchem die Mikropartikel in die Oberfläche des Spritzgusskörpers eingedrückt werden.

14. Verfahren gemäß Anspruch 13,
**dadurch gekennzeichnet,**
**dass** die Partikel nur zu maximal 70 % ihres Durchmessers in den Spritzgusskörper eingedrückt werden.

15. Verfahren gemäß Anspruch 13 oder 14,
**dadurch gekennzeichnet,**
**dass** ein Polymer oder Polymerblend auf der Basis von Polycarbonaten, Poly(meth)acrylaten, Polyamiden, Polyvinylchlorid, Polyethylenen, Polypropylenen, aliphatischen linearen- oder verzweigten Polyalkenen, cyclischen Polyalkenen, Polystyrolen, Polyestern, Polyethersulfonen, Polyacrylnitril oder Polyalkylenterephthalaten, Poly(trifluorethylen), Poly(vinylidenfluorid), Poly(chlortrifluorethylen), Poly(hexafluorpropylen), Poly(perfluorpropylenoxid), Poly(fluoralkylacrylat), Poly(fluoralkylmethacrylat), Poly(vinylperfluoralkylether) oder andere Polymere aus Perfluoralkoxyverbindungen, Poly(isobuten), Poly(4-methyl-1-penten), Polynorbonen als Homo- oder Copolymer sowie deren Gemische zum Spritzgießen eingesetzt wird.

16. Verfahren nach zumindest einem der Ansprüche 13 bis 15,
**dadurch gekennzeichnet,**
**dass** die Spritzgussform eine für die Herstellung von herkömmlichen Spritzgusskörpern notwendige Form ist.

17. Verfahren nach einem der Ansprüche 13 bis 16,
**dadurch gekennzeichnet,**
**dass** die Mikropartikel durch Aufsprühen auf die Spritzgussform aufgebracht werden.

18. Verfahren nach Anspruch 17,
**dadurch gekennzeichnet,**
**dass** die Mikropartikel durch Aufbringen einer Suspension, die Partikel und ein Lösemittel aufweist, auf die Spritzgussform und anschließendes Verdampfen des Lösemittels auf die Spritzgussform aufgebracht werden.

19. Verfahren nach Anspruch 17,
**dadurch gekennzeichnet,**
**dass** die Mikropartikel durch Aufbringen eines Aerosols, das Partikel und ein Treibgas aufweist, auf die Spritzgussform aufgebracht werden.

20. Verfahren nach mindestens einem der Ansprüche 13 bis 19,
**dadurch gekennzeichnet,**
**dass** das Spritzgießen mit einem Druck von größer 40 bar durchgeführt wird.

21. Verfahren nach mindestens einem der Ansprüche 13 bis 20,
**dadurch gekennzeichnet,**
**dass** die eingesetzten Mikropartikel einen mittleren Partikeldurchmesser von 0,02 bis 100 µm aufweisen.

22. Verfahren nach mindestens einem der Ansprüche 13 bis 21,
**dadurch gekennzeichnet,**
**dass** Mikropartikel, ausgewählt aus Silikaten, Mineralien, Metalloxiden, Metallpulvern, Kieselsäuren, Pigmenten oder Polymeren, eingesetzt werden

23. Verfahren nach mindestens einem der Ansprüche 13 bis 22,
**dadurch gekennzeichnet,**
**dass** die eingesetzten Mikropartikel hydrophobe Eigenschaften aufweisen.

24. Verfahren nach mindestens einem der Ansprüche 13 bis 23,
**dadurch gekennzeichnet,**
**dass** die Mikropartikel durch eine Behandlung mit einer geeigneten Verbindung hydrophobe Eigenschaften aufweisen.

25. Verfahren gemäß Anspruch 24,
**dadurch gekennzeichnet,**
**dass** die Mikropartikel vor oder nach dem Verbinden mit der Oberfläche des Spritzgusskörpers mit hydrophoben Eigenschaften ausgestattet werden.

26. Verwendung von Vorrichtungen gemäß einem der Ansprüche 1 bis 12 zur temporären Aufbewahrung von Blut, flüssigen Medikamenten, Drogen, Drogenersatzstoffen,
Bioassayes, Proteinen, Peptiden, Biopharmaceutical oder Nukleinsäuren oder flüssigen Lösungen davon.

## Claims

1. A device produced by means of an injection moulding process for storing and/or handling a liquid, it being possible for the device to be emptied of the stored liquid without residue,
**characterized in that**
the device has at least one surface which comes into contact with the liquid to be stored and has a firmly anchored layer of microparticles which form elevations, and the microparticles are impressed into the surface by an injection moulding step.

2. A device according to claim 1,
**characterized in that**
the elevations have an average height of from 20 nm to 25 µm and an average separation of from 20 nm to 25 µm.

3. A device according to either of claims 1 and 2,
**characterized in that**
the elevations have an average height of from 50 nm to 4 µm and/or an average separation of from 50 nm to 4 µm.

4. A device according to any one of claims 1 to 3,
**characterized in that**
the elevations which are formed by the particles themselves have an aspect ratio of from 0.3 to 0.9.

5. A device according to any one of claims 1 to 4,
**characterized in that**
the microparticles are nanostructured microparticles which have a fine structure having elevations having an aspect ratio of greater than 1.

6. A device according to any one of claims 1 to 5,
**characterized in that**
the microparticles are selected from particles of silicate, mineral, metal oxide, metal powder, silica, pigment and/or polymer.

7. A device according to any one of claims 1 to 6,
**characterized in that**
the microparticles are selected from particles of fumed silica, precipitated silica, aluminium oxide, silicon oxide, doped silicate, fumed silicate and pulverulent polymer.

8. A device according to any one of claims 1 to 7,
**characterized in that**
the microparticles have hydrophobic properties.

9. A device according to any one of claims 1 to 8,
**characterized in that**
the device itself comprises a material selected from polycarbonate, polyoxymethylene, poly-(meth)acrylate, polyamide, polyvinyl chloride, polyethylene, polypropylene, aliphatic linear or branched polyalkene, cyclic polyalkene, polystyrene, polyester, polyether sulphone, polyacrylonitrile or polyalkylene terephthalate, poly(trifluoroethylene), poly(vinylidene fluoride), poly(chlorotrifluoroethylene), poly-(hexafluoropropylene), poly(perfluoropropylene oxide), poly(fluoroalkyl acrylate), poly(fluoroalkyl methacrylate), poly(vinyl perfluoroalkyl ether), or comprises other polymers of perfluoroalkoxy compounds, poly(isobutene), poly(4-methyl-1-pentene), polynorbornene as homo- or copolymers and their mixtures.

10. A device according to any one of claims 1 to 9,
**characterized in that**
the impressed particles are anchored with from 10 to 90% of their average particle diameter within the surface.

11. A device according to any one of claims 1 to 5,
**characterized in that**
the microparticles have an average particle size (diameter) of from 0.02 to 100 µm.

12. A device according to any one of claims 1 to 11,
**characterized in that**
the device is a pipette tip, a pipette, a syringe, a plastic ampoule, a vessel, a reaction vessel, a sealable capsule or a microtiter plate.

13. A process for producing, by injection moulding, a device according to any one of claims 1 to 12 as an injection moulding having at least one surface which has self-cleaning properties and has elevations formed by microparticles
**characterized in that**
microparticles are applied to an injection mould before an injection moulding step and an injection moulding step is then carried out in which the microparticles are impressed into the surface of the injection moulding.

14. A process according to claim 13,
**characterized in that**
the particles are only impressed into the injection moulding to a maximum of 70% of their diameter.

15. A process according to either of claims 13 and 14,
**characterized in that**
injection moulding is carried out using a polymer or polymer blend based on polycarbonate, poly-(meth)acrylate, polyamide, polyvinyl chloride, polyethylene, polypropylene, aliphatic linear or branched polyalkene, cyclic polyalkene, polystyrene, polyester, polyether sulphone, polyacrylonitrile or polyalkylene terephthalate, poly(trifluoroethylene), poly(vinylidene fluoride), poly(chlorotrifluoroethylene), poly-(hexafluoropropylene), poly(perfluoropropylene oxide), poly (fluoroalkyl acrylate), poly(fluoroalkyl methacrylate), poly(vinylperfluoroalkyl ether) or other polymers of perfluoroalkoxy compounds, poly(isobutene), poly(4-methyl-1-pentene) and polynorbornene as homo- or copolymers and their mixtures.

16. A process according to at least one of claims 13 to 15,
**characterized in that**
the injection mould is a mould necessary for producing a conventional injection moulding.

17. A process according to any one of claims 13 to 16,
**characterized in that**
the microparticles are applied to the injection mould by spraying.

18. A process according to claim 17,
**characterized in that**
the microparticles are applied to the injection mould by applying a suspension which comprises the particles and comprises a solvent to the injection mould and then evaporating the solvent.

19. A process according to claim 17,
**characterized in that**
the microparticles are applied to the injection mould by applying an aerosol which comprises particles and comprises a propellant gas.

20. A process according to at least one of claims 13 to 19,
**characterized in that**
the injection moulding is carried out at a pressure of greater than 40 bar.

21. A process according to at least one of claims 13 to 20,
**characterized in that**
the microparticles used have an average particle diameter of from 0.02 to 100 µm.

22. A process according to at least one of claims 13 to 21,
**characterized in that**
the microparticles used are selected from silicate, mineral, metal oxide, metal powder, silica, pigment and/or polymer.

23. A process according to at least one of claims 13 to 22,
**characterized in that**
the microparticles used have hydrophobic properties.

24. A process according to at least one of claims 13 to 23,
**characterized in that**
the microparticles have hydrophobic properties as a result of treatment with a suitable compound.

25. A process according to claim 24,
**characterized in that**
the microparticles are provided with hydrophobic properties before or after binding to the surface of the injection moulding.

26. The use of a device according to any one of claims 1 to 12 for temporary storage of blood, a liquid medicament, drug, drug replacement, bioassay, protein, peptide, biopharmaceutical or nucleic acid or liquid solution thereof.

## Revendications

1. Dispositif, fabriqué par moulage par injection, pour conserver et/ou manipuler des liquides, le dispositif pouvant être entièrement vidé des liquides conservés,
**caractérisé en ce que**
le dispositif présente au moins une surface qui entre en contact avec le liquide à conserver, et qui présente une couche solidement ancrée de microparticules formant des aspérités, et les microparticules sont introduites en pression dans la surface lors d'une étape de moulage par injection.

2. Dispositif selon la revendication 1,
**caractérisé en ce que**
les aspérités présentent une hauteur moyenne de 20 nm à 25 µm et une distance moyenne de 20 nm à 25 µm.

3. Dispositif selon la revendication 1 ou 2,
**caractérisé en ce que**
les aspérités présentent une hauteur moyenne de 50 nm à 4 µm et/ou une distance moyenne de 50 nm à 4 µm.

4. Dispositif selon l'une quelconque des revendications 1 à 3,
**caractérisé en ce que**
les aspérités, formées par les particules elles-mêmes, présentent un rapport d'aspect de 0,3 à 0,9.

5. Dispositif selon l'une quelconque des revendications 1 à 4,
**caractérisé en ce que**
les microparticules sont des microparticules ayant une structure de l'ordre du nanomètre qui présentent une structure fine comportant des aspérités d'un rapport d'aspect supérieur à 1.

6. Dispositif selon l'une quelconque des revendications 1 à 5,
**caractérisé en ce que**
les microparticules sont choisies parmi des particules de silicates, de minéraux, d'oxydes métalliques, de poudres métalliques, d'acides siliciques, de pigments et/ou de polymères.

7. Dispositif selon l'une quelconque des revendications 1 à 6,
**caractérisé en ce que**
les microparticules sont choisies parmi des particules d'acides siliciques pyrogènes, d'acides siliciques de précipitation, d'oxyde d'aluminium, d'oxyde de silicium, de silicates dopés, de silicates pyrogènes ou de polymères pulvérulents.

8. Dispositif selon l'une quelconque des revendications 1 à 7,
**caractérisé en ce que**
les microparticules présentent des propriétés hydrophobes.

9. Dispositif selon l'une quelconque des revendications 1 à 8,
**caractérisé en ce que**
le dispositif lui-même présente une matière choisie parmi les polycarbonates, les polyoxyméthylènes, les poly(méth)acrylates, les polyamides, le chlorure de polyvinyle, les polyéthylènes, les polypropylènes, les polyalcènes aliphatiques linéaires ou ramifiés, les polyalcènes cycliques, les polystyrènes, les polyesters, les polyéthersulfones, le polyacrylonitrile ou les térephtalates de polyalkylène, le poly(trifluoréthylène), le poly-(fluorure de vinylidène), le poly(chlorotrifluoréthylène), le poly-(hexafluoropropylène), le poly(oxyde de perfluoropropylène), le poly(acrylate de fluoroalkyle), le poly(méthacrylate de fluoroalkyle), le poly(vinylperfluoroalkyle éther) et d'autres polymères de composés perfluoroalcoxy, poly(isobutène), poly(4-méthyl-1-pentène), polynorbornène en tant qu'homo ou copolymère ainsi que leurs mélanges.

10. Dispositif selon l'une quelconque des revendications 1 à 9,
**caractérisé en ce que**
les particules introduites sous pression sont ancrées dans la surface avec 10 à 90 % de leur diamètre moyen.

11. Dispositif selon l'une quelconque des revendications 1 à 5,
**caractérisé en ce que**
les microparticules présentent une taille moyenne (diamètre) de 0,02 à 100 µm.

12. Dispositif selon l'une quelconque des revendications 1 à 11,
**caractérisé en ce que**
le dispositif est une pointe de pipette, une pipette, une seringue, une ampoule en matière plastique, un récipient, un récipient de réaction, un creuset verrouillable ou une plaque de microtitrage.

13. Procédé de fabrication de dispositifs selon les revendications 1 à 12 en tant que corps moulé par injection comportant au moins une surface qui présente des propriétés autonettoyantes et des aspérités formées par des microparticules, par moulage par injection
**caractérisé en ce qu'**
avant une étape de moulage par injection, on applique les microparticules sur un moule d'injection, puis on réalise une étape de moulage par injection lors de laquelle les microparticules sont introduites sous pression dans la surface du corps moulé par injection.

14. Procédé selon la revendication 13,
**caractérisé en ce que**
les particules ne sont introduites que sous pression à 70 % au maximum de leur diamètre dans le corps moulé par injection.

15. Procédé selon la revendication 13 ou 14
**caractérisé en ce qu'**
on utilise un polymère ou un mélange de polymères à base de polycarbonates, de poly(méth)acrylates, de polyamides, de chlorure de polyvinylidène, de polyéthylènes, de polypropylènes, de polyalcènes aliphatiques linéaires ou ramifiés, de polyalcènes cycliques, de polystyrènes, de polyesters, de polyéthersulfones, de polyacrylonitrile ou de térephtalates de polyacrylène, de poly(trifluoréthylène), de poly(fluorure de vinylidène), de poly(chlorotrifluoréthylène), de poly(hexafluoropropylène), de poly(oxyde de perfluoropropylène), de poly(acrylate de fluoroalkyle), de poly(fluoroalkyle méthacrylate), de poly-(vinylperfluoroalkyle éther) ou d'autres polymères de composés de perfluoroalkyloxy, de poly(isobutène), de poly(4-méthyl-1-pentène), de polynorbonène, en tant qu'homo ou copolymère ainsi que leurs mélanges pour le moulage par injection.

16. Procédé selon au moins l'une quelconque des revendications 13 à 15,
**caractérisé en ce que**
le moule à injection est un moule nécessaire à la fabrication de corps moulés par injection conventionnels.

17. Procédé selon au moins l'une quelconque des revendications 13 à 16,
**caractérisé en ce que**
les microparticules sont appliquées par aspersion sur le moule à injection.

18. Procédé selon la revendication 17,
**caractérisé en ce que**
les microparticules sont appliquées sur le moule à injection par application d'une suspension contenant des particules et un solvant, et par vaporisation subséquente du solvant sur le moule à injection.

19. Procédé selon la revendication 17,
**caractérisé en ce que**
les microparticules sont appliquées sur le moule à injection par application d'un aérosol contenant des particules et un gaz propulseur.

20. Procédé selon au moins l'une quelconque des revendications 13 à 19,
**caractérisé en ce que**
le moulage par injection est réalisé à une pression supérieure à 40 bars.

21. Procédé selon au moins l'une quelconque des revendications 13 à 20,
**caractérisé en ce que**
les microparticules mises en oeuvre présentent un diamètre de particule moyen de 0,02 à 100 µm.

22. Procédé selon au moins l'une quelconque des revendication 13 à 21,
**caractérisé en ce que**
les microparticules sont choisies parmi des silicates, des minéraux, des oxydes métalliques, des poudres métalliques, des acides siliciques, des pigments ou des polymères.

23. Procédé selon au moins l'une quelconque des revendications 13 à 22,
**caractérisé en ce que**
les microparticules mises en oeuvre présentent des propriétés hydrophobes.

24. Procédé selon au moins l'une quelconque des revendications 13 à 23,
**caractérisé en ce que**
les microparticules présentent des propriétés hydrophobes grâce à un traitement avec un composé approprié.

25. Procédé selon la revendication 24,
**caractérisé en ce que**
les microparticules sont dotées de propriétés hydrophobes avant ou après la liaison à la surface du corps moulé par injection.

26. Utilisation d'équipements selon l'une quelconque des revendications 1 à 12, pour la conservation temporaire de sang, de médicaments liquides, de produits pharmaceutiques, de succédanés de produits pharmaceutiques, de bio-essais, de protéines, de peptides, de biopharmaceutiques ou d'acides nucléiques ou de solutions liquides.
